# EUROPEAN PATENT SPECIFICATION

(11) **EP 0 611 505 B1**
(45) Date of publication and mention of the grant of the patent: **23.09.1998**
(21) Application number: 92922448.3
(22) Date of filing: 02.11.1992
(51) Int. Cl.: H04H 1/00, H04L 5/06

(54) **CODING METHOD FOR FDM BROADCAST TRANSMISSIONS, TRANSMITTER AND RECEIVER FOR CARRYING OUT THE METHOD**
KODIERUNGSVERFAHREN FÜR FDM RUNDFUNKSENDUNGEN, SENDER UND EMPFÄNGER ZUR DURCHFÜHRUNG DES VERFAHRENS
PROCEDE DE CODAGE DES TRANSMISSIONS RADIODIFFUSEES FDM, EMETTEUR ET RECEPTEUR POUR METTRE EN OEUVRE LE PROCEDE

(30) Priority: 04.11.1991 GB 9123376
(43) Date of publication of application: 24.08.1994
(73) Proprietor: BRITISH BROADCASTING CORPORATION, London W1A 1AA (GB)
(72) Inventor: CHAMBERS, John, Philip, Tadworth Surrey KT20 6NP (GB)
(74) Representative: Garratt, Peter Douglas
(86) International application number: GB9201997
(87) International publication number: WO9309616

(56) References cited:
- FR-A- 2 601 210
- US-A- 4 884 139
- US-A- 4 943 980
- IEEE TRANSACTIONS ON CONSUMER ELECTRONICS vol. 35, no. 3, August 1989, NEW YORK US pages 493 - 503 B. LE FOCH ET AL. 'Digital Sound Broadcasting to Mobile Receivers'

## Description

### BACKGROUND OF THE INVENTION

This invention relates to a method of coding broadcast transmissions so as to carry additional data, such as for example an identification of the transmitter concerned. The method is applicable to transmission systems using a frequency division multiplex technique.

Such a technique is used in the system proposed by Pommier, D. and Ratliff, P.A. in a paper "New Prospects for High Quality Digital Sound Broadcasting to Mobile Portable and Fixed Radio Receivers", IBC 88, IEE Conference Publication No.293, pages 349 to 353. The system involves:
(a) a Fast Fourier Transform (FFT) for both modulation and demodulation processes to overcome frequency selectivity, using many simultaneous narrowband carriers,
(b) convolutional coding in conjunction with a Viterbi maximum-likelihood decoding algorithm to provide a large coding gain,
(c) two-dimensional, frequency and time interleaving to realise the large coding gain in all fixed and mobile receiving conditions, and
(d) an outer blockcode concatenated with the convolutional inner code.

The system described has been found to provide excellent reception quality in mobile use even in the presence of substantial multipath propagation. The authors of the above paper propose its use for a single-frequency network of terrestrial digital stereo audio transmitters in the 50-250 MHz range. Because the receiver is able to cope with multipath signals, it does not, in principle, need to know which transmitter the signals have come from. Furthermore any 'holes' in the coverage area may be filled in by providing a local low-power transmitter on the same frequencies as those in the network. The system has reduced potential to interfere with other radio communications services because of its uniform spectral characteristics. All these factors make it an attractive system to use in an already-crowded broadcasting spectrum.

However, we have appreciated that there are circumstances when it would be desirable to be able to identify individual transmitters in such a single-frequency network. For the broadcaster, this would be of assistance for monitoring and measurement purposes. In a sophisticated receiver, this information could be of assistance for example in navigation or in selecting services appropriate to a particular geographical area.

However, the whole point of the single-frequency system described is that the receiver can simultaneously accept signals from more than one transmitter without differentiating between them. The same signal emanates from all transmitters which are carrying the same services.

The digital audio broadcasting (DAB) system, also known as digital sound broadcasting (DSB), proposed in the above paper has 500 narrowband carriers, and typically there might be between 400 and 1800 carriers. These carriers are used in an orthogonal frequency-division multiplex (OFDM) technique, now generally called the coded orthogonal frequency division multiplex (COFDM).

### SUMMARY OF THE INVENTION

According to the present invention a method of transmitting additional data on a broadcast transmission which uses a frequency-division multiplex technique is provided, in which the signal is transmitted on a plurality of carriers. The amplitudes of the carriers are relatively varied to each other in accordance with the additional data.

The invention also relates to a transmitter and a receiver for carrying out such a method.

### BRIEF DESCRIPTION OF THE DRAWINGS

The system will be described by way of example with reference to the DAB system proposed in the above paper and with reference to the drawings, in which:
Figure 1 is a block schematic of a DAB transmitter embodying the invention; and
Figure 2 is a block schematic of a DAB receiver embodying the invention.

### DETAILED DESCRIPTION OF THE PREFERRED EMBODIMENT

As the DAB signal is produced by a linear FFT operation it is a simple operation to reduce the amplitude of half the carriers by, say, one sixteenth. As the whole system is designed to adapt to variation of carrier amplitude, this operation does not upset the receivers. On average the effect is equivalent to a loss of, in this example, one thirty-second of the signal amplitude.

A standard receiver continues to operate normally in the presence of this systematic and static amplitude modulation. However, because the receiver FFT operation is linear, the evidence is available to allow the amplitude modulation pattern to be inferred by suitable long-term integration and correlation against the known possible patterns.

A particular example of amplitude modulation patterns will now be given, capable of distinguishing one or more of seven different transmitters received at the same time. The principle can in theory be extended to any number, up to the number of carriers in the DAB system, but the complexity then increases, and the sensitivity decreases.

The DAB carriers, typically between 400 and 1800 in number, are divided into eight interleaved groups 0-7 by consecutive numbering modulo-8 (i.e. dividing by 8 and looking at the remainder). Thus each group spans the full bandwidth in a similar way, as opposed to dividing the carriers into eight adjacent groups in the frequency domain. The amplitude of each carrier group from each transmitter A-G is unchanged (0) or attenuated (1) according to the entry in either Table 1 or Table 2 below appended to this description.

Each of Tables 1 and 2 provides orthogonality between the amplitude modulation applied to the seven transmitters, allowing the strength of each of the seven patterns in the received signal to be established by correlation in the receiver without interference from the other six. Thus the identity of the contributing transmitters, and their 'average' relative signal strength, can be established.

For further information concerning the structure and operation of the proposed DAB system reference should be made to the Proceedings of the First International Symposium on Digital Audio Broadcasting, Montreux, 8-9 June 1992, organised by the European Broadcasting Union and others. A preferred example of a DAB transmitter/receiver system embodying the invention will now be described with reference to the drawings.

The presently-proposed DAB transmitter waveform comprises a sequence of typically 76 adjacent symbol blocks interrupted every 96ms (or 24ms) by a null period in which the signal is effectively absent. Each symbol block contains some 1536 carriers equi-spaced in frequency and of equal amplitudem differentially modulated from symbol to symbol in one of four phases. In practice, the waveform is synthesised by taking the output of a Fast Fourier Transform whose input is the two bits per carrier indicating the required phase of each carrier.

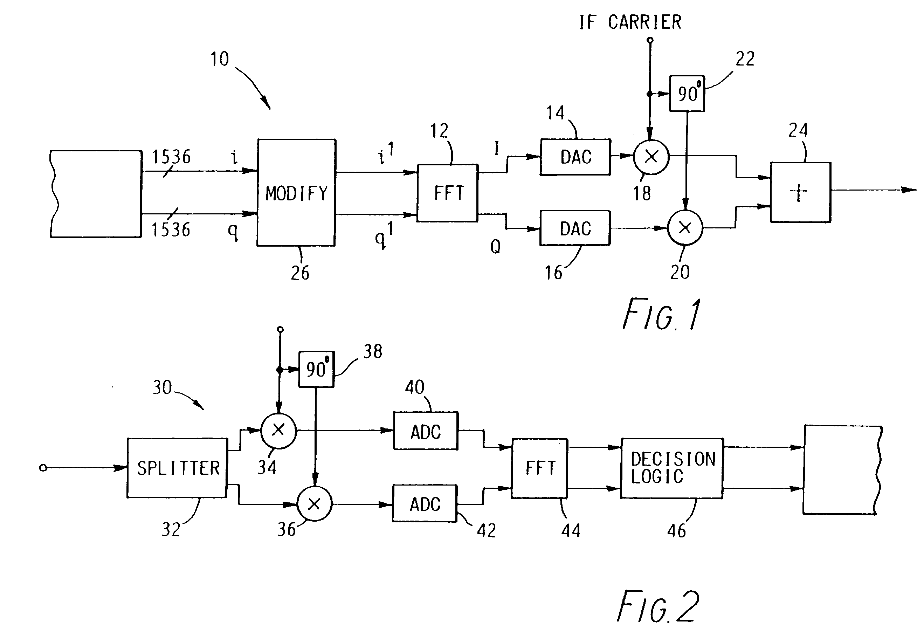

Figure 1 indicates how the transmitted signal is assembled in an idealised transmitter 10. Every symbol block period the DAB encoding equipment produces 1536 pairs of bits (in the 96ms case) corresponding to the quadrature phase modulation to be applied to the 1536 equi-spaced carriers. Every symbol period these are loaded into a digital Fast Fourier Transform (FFT) circuit 12 as the input and a similar number of outputs appear. The inputs correspond to the frequency domain, the outputs to the time domain. Although the inputs are basically two-level, corresponding to a binary bit, the outputs are multi-level (typically eight bits corresponding to 256 equispaced analogue levels). The two sequences of outputs, corresponding to the in-phase ("I") and quadrature ("Q") parts of the signal, are each passed through digital-to-analogue converters 14, 16 prior to modulation in modulators 18, 20 by the intermediate-frequency carrier which itself is made available in two phases in quadrature as illustrated by 90° phase shift circuit 22. Each operation of the FFT produces one symbol block. The resulting signal, a sequence of symbol blocks, is then up-converted to the r.f. carrier. Note that it is a feature of the DAB system that the centre 'carrier' frequency is, in fact, absent.

In a receiver as shown in Figure 2 the received i.f. waveform is split into two by a splitter 32 and demodulated using multipliers 34, 36 with two versions of the local IF oscillator output in phase quadrature, as indicated by 90° phase shift circuits 38, and these analogue signals are converted to a sequence of digitised samples in converters 40, 42. The sequences of samples corresponding to successive symbol blocks are applied in turn to an FFT 44 whose outputs represent the (complex) amplitude of the individual carriers. In practice, the absolute and relative amplitudes of the carriers have been corrupted by numerous effects, most importantly the propagation conditions (selective fading, multipath etc.), so these amplitudes are non-ideal. A decision logic circuit 46 is used to produce a logical signal from the (typically eight-bit) carrier amplitude information. Rather than a simple binary threshold decision, this decision logic may produce a (typically) three-bit signal, non-linearly coded to indicate the polarity and the confidence in that particular bit. This information can then be used with appropriate 'weighting' in any 'soft-decision' decoding algorithm which takes advantage of the redundancy in the bits.

In the invention described the inputs to the transmitter FFT 12 are modified by a circuit 26 in a fixed (at least in the short term) pattern, peculiar to each transmitter or group of transmitters, such that the amplitudes of about half the carriers are reduced by a small factor. This is indicated in the figure by the replacement of bits i and q by the levels i' and q'. Such patterns are well spread across the bandwidth and they are mutually orthogonal. Typically the FFT might normally operate with input 01111111 for '0' and 11111111 for '1', using a convention where the first bit is sign, the remaining 7 are magnitude. In such a case the input for the reduced carrier might be 01111000 for '0' and 11111000 for '1', a reduction of amplitude from level 127 to level 120.

Such a systematic modification to the carriers will not affect the normal operation of a receiver but receivers can be equipped with additional logic in the decision logic circuit 46 to 'integrate out' by correlation both the pattern of each transmitter contributing to the signal and its relative contribution to the total signal strength'. The decision logic circuit 46 may for this purpose include means for comparing the amplitude of the carriers with their mean amplitude to determine whether they are above or below the mean.

There is a trade-off between the number of different orthogonal patterns used, the variation of amplitude, and the time taken before a reliable indication can be received. It is expected that a response within a few seconds would be practicable with a relatively modest amplitude variation. Of course, occasional changes to the transmitter identification patterns over a time scale longer than this response time could be made as a form of low bit-rate signalling.

Note that a reduction in about half of the carrier amplitudes has been described, on the assumption that the transmitter FFT is normally loaded with 'full house' binary numbers. If, for design reasons, lower numbers are used, the same effect could be achieved by increasing some amplitudes, or the mean amplitude could be preserved by increasing some and decreasing others with respect to the normal.

**TABLE 1**

| | 0 | 1 | 2 | 3 | 4 | 5 | 6 | 7 |
|---|---|---|---|---|---|---|---|---|
| A | 0 | 0 | 0 | 0 | 1 | 1 | 1 | 1 |
| B | 0 | 0 | 1 | 1 | 1 | 1 | 0 | 0 |
| C | 0 | 0 | 1 | 1 | 0 | 0 | 1 | 1 |
| D | 0 | 1 | 1 | 0 | 0 | 1 | 1 | 0 |
| E | 0 | 1 | 1 | 0 | 1 | 0 | 0 | 1 |
| F | 0 | 1 | 0 | 1 | 1 | 0 | 1 | 0 |
| G | 0 | 1 | 0 | 1 | 0 | 1 | 0 | 1 |

**TABLE 2**

| | 0 | 1 | 2 | 3 | 4 | 5 | 6 | 7 |
|---|---|---|---|---|---|---|---|---|
| A | 1 | 1 | 1 | 0 | 1 | 0 | 0 | 0 |
| B | 0 | 1 | 1 | 1 | 0 | 1 | 0 | 0 |
| C | 0 | 0 | 1 | 1 | 1 | 0 | 1 | 0 |
| D | 1 | 0 | 0 | 1 | 1 | 1 | 0 | 0 |
| E | 0 | 1 | 0 | 0 | 1 | 1 | 1 | 0 |
| F | 1 | 0 | 1 | 0 | 0 | 1 | 1 | 0 |
| G | 1 | 1 | 0 | 1 | 0 | 0 | 1 | 0 |

## Claims

1. A method of transmitting additional data on a broadcast transmission which uses a frequency-division multiplex technique, in which the signal is transmitted on a plurality of carriers, characterised in that the amplitudes of the carriers are varied relative to each other in accordance with the additional data.

2. A method according to claim 1, in which the additional data includes data identifying the transmitter.

3. A method according to claim 1 or 2, in which the amplitudes of selected ones of the carriers are reduced by a small amount.

4. A method according to claim 1, 2 or 3, in which the carriers are grouped and the amplitudes of groups of carriers varied to encode the additional data.

5. A method according to claim 4, in which the groups are interleaved in the spectrum.

6. A transmitter for transmitting additional data on a broadcast transmission which uses a frequency-division multiplex technique, comprising means (12-24) for generating a broadcast transmission signal using a frequency-division multiplex technique having a plurality of carriers, and characterised by means (26) for relatively varying the amplitudes of the carriers in accordance with additional data.

7. A transmitter network comprising a plurality of transmitters, each transmitter comprising means (12-24) for generating a broadcast transmission signal using a frequency-division multiplex technique having a plurality of carriers, and characterised by means (26) for relatively varying the amplitudes of the carriers in accordance with additional data and in that the coding algorithms used in the different transmitters provide orthogonality between the amplitude modulation applied to the transmitters.

8. A receiver for receiving a broadcast transmission transmitted using a frequency-division multiplex technique and carrying additional information, the receiver comprising means (32-44) for receiving and demodulating the plurality of carriers carrying the signal in the frequency-division multiplex technique, and characterised by means (46) for determining relative variation between the amplitudes of the carriers to extract the additional data therefrom.

9. A receiver according to claim 8, in which the carriers are grouped, and the means (46) for determining relative variation is arranged to detect relative variation in the amplitudes of the groups of carriers to extract the additional data.

10. A receiver according to claim 9, in which the groups are interleaved in the spectrum.

## Patentansprüche

1. Verfahren zur Übertragung von zusätzlichen Daten bei einer Rundfunkübertragung, die ein Frequenzmultiplex-Verfahren einsetzt, bei welchem das Signal auf einer Anzahl von Trägern übertragen wird, dadurch gekennzeichnet, daß die Amplituden der Träger relativ zueinander entsprechend den zusätzlichen Daten geändert werden.

2. Verfahren nach Anspruch 1, bei dem die zusätzlichen Daten Daten umfassen, die den Sender identifizieren.

3. Verfahren nach Anspruch 1 oder 2, bei dem die Amplituden von ausgewählten Trägern der Träger um einen kleinen Beitrag verringert werden.

4. Verfahren nach Anspruch 1, 2 oder 3, bei dem die Träger gruppiert und die Amplituden von Gruppen von Trägern geändert werden, um die zusätzlichen Daten zu kodieren.

5. Verfahren nach Anspruch 4, bei dem die Gruppen in dem Spektrum überlappt bzw. versetzt sind.

6. Sender zum Übertragen von zusätzlichen Daten bei einer Rundfunkübertragung, die ein Frequenzmultiplex-Verfahren einsetzt, umfassend Mittel (12-24) zum Erzeugen eines Rundfunkübertragungssignals unter Verwendung eines Frequenzmultiplex-Verfahrens, das eine Anzahl von Trägern aufweist, und gekennzeichnet durch Mittel (26), um die Amplituden der Träger entsprechend zusätzlichen Daten relativ zu ändern.

7. Sendernetzwerk, umfassend eine Anzahl von Sendern, wobei jeder Sender Mittel (12-24) umfaßt, um unter Verwendung eines Frequenzmultiplex-Verfahrens ein Rundfunkübertragungssignal zu erzeugen, das eine Anzahl von Trägern aufweist, und gekennzeichnet durch Mittel (26), um die Amplituden der Träger entsprechend zusätzlichen Daten relativ zu ändern, und dadurch, daß die Kodierungsalgorithmen, die in den verschiedenen Sendern verwendet werden, für eine Orthogonalität zwischen der auf die Sender angewendeten Amplitudenmodulation sorgen.

8. Empfänger zum Empfangen einer Rundfunkübertragung, die unter Verwendung eines Frequenzmultiplex-Verfahrens übertragen wurde und zusätzliche Information trägt, der Empfänger umfassend Mittel (32-44) zum Empfangen und Demodulieren der Anzahl von Trägern, die das Signal bei dem Frequenzmultiplex-Verfahren tragen, und gekennzeichnet durch Mittel (46), um eine relative Änderung zwischen den Amplituden der Träger zu bestimmen, um aus diesen die zusätzlichen Daten zu gewinnen.

9. Empfänger nach Anspruch 8, bei dem Träger gruppiert sind und das Mittel (46) zur Bestimmung der relativen Änderung ausgelegt ist, um eine relative Änderung in den Amplituden der Gruppen von Trägern zu detektieren, um die zusätzlichen Daten zu gewinnen.

10. Empfänger nach Anspruch 9, bei dem die Gruppen in dem Spektrum überlappt bzw. versetzt sind.

## Revendications

1. Procédé de transmission de données additionnelles sur une transmission radiodiffusée qui utilise une technique de multiplexage à division de fréquence, dans laquelle le signal est transmis sur une pluralité de porteuses, caractérisé en ce que les amplitudes des porteuses sont modifiées les unes par rapport aux autres en fonction des données additionnelles.

2. Procédé selon la revendication 1, dans lequel les données additionnelles comprennent des données identifiant l'émetteur.

3. Procédé selon la revendication 1 ou 2, dans lequel les amplitudes de porteuses choisies parmi les porteuses sont réduites d'une petite quantité.

4. Procédé selon la revendication 1, 2 ou 3, dans lequel les porteuses sont groupées et les amplitudes de groupes de porteuses sont modifiées pour coder les données additionnelles.

5. Procédé selon la revendication 4, dans lequel les groupes sont imbriqués dans le spectre.

6. Emetteur pour transmission de données additionnelles sur une transmission radiodiffusée qui utilise une technique de multiplexage à division de fréquence, comprenant des moyens (12-24) de génération d'un signal de transmission radiodiffusée utilisant une technique de multiplexage à division de fréquence ayant une pluralité de porteuses, caractérisé par des moyens (26) de modification relative des amplitudes des porteuses en fonction des données additionnelles.

7. Réseau d'émetteurs comprenant une pluralité d'émetteurs, chaque émetteur comprenant des moyens (12-24) de génération d'un signal de transmission radiodiffusée utilisant une technique de multiplexage à division de fréquence ayant une pluralité de porteuses, caractérisé par des moyens (26) de modification relative des amplitudes des porteuses en fonction des données additionnelles, et en ce que les algorithmes de codage utilisés dans les différents émetteurs produisent une orthogonalité entre les modulations d'amplitude appliquées aux émetteurs.

8. Récepteur pour la réception d'une transmission radiodiffusée transmise par une technique de multiplexage à division de fréquence et portant des informations additionnelles, le récepteur comprenant des moyens (32-44) de réception et de démodulation de la pluralité de porteuses portant le signal dans la technique de multiplexage à division de fréquence, caractérisé par des moyens (46) de détermination de la variation relative entre les amplitudes des porteuses, pour en extraire les données additionnelles.

9. Récepteur selon la revendication 8, dans lequel les porteuses sont groupées, et les moyens (46) de détermination de la variation relative sont agencés de manière à détecter la variation relative des amplitudes de groupes de porteuses afin d'extraire les données additionnelles.

10. Récepteur selon la revendication 9, dans lequel les groupes sont imbriqués dans le spectre.
